# EUROPÄISCHE PATENTSCHRIFT

(11) **EP 1 916 344 B1**
(45) Veröffentlichungstag und Bekanntmachung des Hinweises auf die Patenterteilung: **15.02.2012**
(21) Anmeldenummer: 07118171.3
(22) Anmeldetag: 10.10.2007
(51) Int. Cl.: E03D 5/094, F16C 1/10

(54) **Betätigungsvorrichtung für einen Spülkastens**
Actuation device for a cistern
Dispositif d'actionnement d'un réservoir de chasse d'eau

(30) Priorität: 17.10.2006 DE 202006016049 U
(43) Veröffentlichungstag der Anmeldung: 30.04.2008
(73) Patentinhaber: VIEGA GmbH & Co. KG, 57439 Attendorn (DE)
(72) Erfinder: Wessel, Heinz-Werner, 58840 Plettenberg (DE)
(74) Vertreter: Cohausz & Florack

(56) Entgegenhaltungen:
- EP-A1- 1 602 788
- DE-A1- 10 113 115
- FR-A1- 2 330 907
- FR-A1- 2 660 338
- FR-A1- 2 819 835

## Beschreibung

Die Erfindung betrifft eine Vorrichtung zum Auslösen eines Spülvorgangs bei einem sanitären Spülkasten, mit einem Ablaufventil, einer Betätigungsplatte und mindestens zwei flexiblen Kraftübertragungsgliedern, wobei das jeweilige Kraftübertragungsglied die Bewegung einer Betätigungstaste auf mindestens ein Auslöseelement für das Ablaufventil überträgt, und wobei das jeweilige Kraftübertragungsglied aus einem Bowdenzug gebildet ist.

Eine Betätigungsvorrichtung für ein Ablaufventil eines sanitären Spülkastens mit einer Betätigungsplatte und mindestens zwei flexiblen Kraftübertragungsgliedern ist aus der DE 101 13 115 A1 bekannt. Die flexiblen Kraftübertragungsglieder der bekannten Betätigungsvorrichtung bestehen aus in flexiblen Hüllen geführten mechanischen Druckübertragungsgliedern, die bevorzugt als von Windung zu Windung abstandslos gewickelte Zylinderfederelemente ausgeführt sind, während die flexiblen Hüllen bevorzugt aus einem halbhart-elastischen Kunststoff geformt sind. An den beiden Endbereichen des jeweiligen Kraftübertragungsgliedes sind Führungshülsen angeordnet, in denen Druckstempel geführt sind, welche mit den Enden der Druckübertragungsglieder verbunden sind. Die Enden der flexiblen Hüllen sind dabei in den Führungshülsen befestigt, welche ihrerseits an der Betätigungsplatte bzw. dem Ventilgehäuse des Ablaufventils befestigt sind.

Solche flexiblen, druckbelasteten Kraftübertragungsglieder neigen beim Betätigen zum Ausknicken, so dass eine sichere Funktionsweise der damit ausgestatteten Betätigungsvorrichtungen mitunter nicht oder nur eingeschränkt erzielbar ist. Zudem scheint die Montage der bekannten Betätigungsvorrichtung relativ viele Arbeitsschritte zu erfordern.

Des Weiteren ist aus der FR 2 819 835 A1 eine Betätigungsvorrichtung für einen Spülkasten mit einem Bowdenzug bekannt, bei der die Druckkraft auf eine Betätigungstaste durch einen Kraftwandler in eine Zugkraft umgewandelt wird. Das Kabel des Bowdenzuges ist dabei mit einem Beträtigungshebel verbunden, so dass durch Ziehen am Kabel das Überlaufrohr im Spülkasten angehoben und die Spülung ausgelöst wird. Diese bekannte Betätigungsvorrichtung lässt sich jedoch nicht gut vormontieren und erfordert deshalb ebenfalls eine aufwändige Endmontage mit relativ vielen Arbeitsschritten.

Der vorliegenden Erfindung liegt die Aufgabe zugrunde, eine Vorrichtung der eingangs genannten Art zu schaffen, die bei flexibler Anbindungsmöglichkeit an eine Betätigungsplatte eine hohe Funktionssicherheit bietet und sich in wenigen Arbeitsschritten bequem montieren sowie demontieren lässt.

Gelöst wird diese Aufgabe durch eine Vorrichtung mit den im Anspruch 1 angegebenen Merkmalen.

Die erfindungsgemäße Vorrichtung umfasst ein Ablaufventil, eine Betätigungsplatte und mindestens zwei flexible Kraftübertragungsglieder, wobei das jeweilige Kraftübertragungsglied die Bewegung einer Betätigungstaste der Betätigungsplatte auf mindestens ein Auslöseelement für das Ablaufventil überträgt. Das jeweilige Kraftübertragungsglied ist dabei aus einem Bowdenzug gebildet, wobei zwischen dem Bowdenzug und der Betätigungstaste ein Kraftwandler angeordnet ist, der eine mit der Betätigungstaste ausgeübte Druckkraft in eine Zugkraft umwandelt und eine Halterung aufweist, die mit mindestens einem Clipelement versehen und mit der Betätigungsplatte lösbar verbindbar ist, wobei jedem der Bowdenzüge ein Auslöseelement zugeordnet ist und die Auslöseelemente gemeinsam an einer weiteren Halterung gelagert sind, die mit mindestens einem Verbindungselement zur Herstellung einer lösbaren, form- und/oder kraftschlüssigen Verbindung mit einem dem Ablaufventil zugeordneten Gehäuse versehen ist, und wobei die weitere Halterung zwei parallel zueinander verlaufende Flansch- oder Stegabschnitte als Verbindungselemente aufweist, die mit an dem Gehäuse des Ablaufventils angeformten Winkelelementen zusammenwirken und eine lösbare, form- und/oder kraftschlüssige Verbindung bilden.

Die Bowdenzüge sind an vielen Stellen der Betätigungsplatte bzw. des Ablaufventils anbringbar und erweitern und vereinfachen dadurch die Verwirklichung von speziellen Wünschen bezüglich des Designs (Formgestaltung) der Betätigungsplatte und auch bezüglich der technischen Ausgestaltung des Ablaufventils. Durch die zahlreichen Anbindungsmöglichkeiten der Bowdenzüge ergeben sich vielfältige neue Gestaltungsmöglichkeiten insbesondere beim Design der Betätigungsplatte.

Bei der erfindungsgemäßen Vorrichtung werden die Bowdenzüge mittels der Kraftwandler entsprechend ihres Funktionscharakters als Zugelemente verwendet. Im Vergleich zu flexiblen druckbelasteten Kraftübertragungsgliedern gemäß der DE 101 13 115 A1 sind auf Zug belastete Bowdenzüge viel funktionssicherer und können flexibler ausgeführt werden, da sie bei Betätigung nicht zum Ausknicken neigen, was bei den druckbelasteten Kraftübertragungsgliedern eine zuverlässige Funktionsweise beeinträchtigen kann.

Mittels der mit der Betätigungsplatte bzw. dem Ablaufventil lösbar verbindbaren Halterungen lässt sich die Betätigungsvorrichtung in wenigen Arbeitsschritten bequem montieren und entsprechend einfach und schnell demontieren.

Die Bowdenzüge und die mit der Betätigungsplatte bzw. dem Ablaufventil lösbar verbindbaren Halterungen sind vorzugsweise als Einheit ausgeführt, wodurch die Montage und Demontage wesentlich vereinfacht wird.

Eine besonders einfache und zuverlässige Montage ergibt sich, wenn erfindungsgemäß die dem Ablaufventil zugeordnete Halterung zwei parallel zueinander verlaufende Flansch- oder Stegabschnitte als Verbindungselemente aufweist, die mit an dem Gehäuse des Ablaufventils angeformten Winkelelementen zusammenwirken und eine lösbare, form- und/oder kraftschlüssige Verbindung bilden. Vorzugsweise ist dabei an den Flansch- oder Stegabschnitten und/oder an den Winkelelementen mindestens ein Clipelement angeformt, das in einer bestimmten Montagestellung der Halterung relativ zum Gehäuse des Ablaufventils einrastet. Dieses vom Monteur wahrnehmbare Einrasten erleichtert die funktionsgerechte Positionierung der Halterung am Gehäuse des Ablaufventils.

Sehr günstige Gestaltungsmöglichkeiten ergeben sich für das Design der Betätigungsplatte, wenn entsprechend einer weiteren bevorzugten Ausgestaltung der erfindungsgemäßen Vorrichtung die den Bowdenzügen zugeordneten Kraftwandler an getrennten Halterungen gelagert sind. Die Halterungen können dann unabhängig voneinander an geeigneten Stellen der Betätigungsplatte angeordnet werden.

Die Kraftwandler der erfindungsgemäßen Vorrichtung lassen sich konstruktiv einfach realisieren, wenn der jeweilige Kraftwandler gemäß einer bevorzugten Ausgestaltung einen ersten Hebel und einen damit verbundenen zweiten Hebel aufweist, wobei an dem ersten Hebel ein der Betätigungstaste (Drucktaste) zugeordneter Stößel gelenkig angebracht ist, und an dem zweiten Hebel eine Aufnahme zur Anbindung des Zugdrahtes des Bowdenzuges vorgesehen ist. Eine mit der Betätigungstaste (Drucktaste) der Betätigungsplatte ausgeübte Druckkraft wird so zuverlässig in eine Zugkraft umgewandelt.

Für die Anwendung der erfindungsgemäßen Vorrichtung in der so genannten Zwei-Mengen-Spültechnik und/oder der Spül-Stopp-Technik sieht die Vorrichtung vor, dass jedem der Bowdenzüge ein Auslöseelement zugeordnet ist, wobei die Auslöseelemente gemeinsam an der mit dem Ablaufventil verbindbaren Halterung gelagert sind. Vorzugsweise ist dabei der jeweilige Bowdenzug mit einem an dieser Halterung schwenkbar gelagerten Hebel verbunden, der drehstarr mit einem als Auslöseelement fungierenden Auslösehebel verbunden ist.

Für die Anwendung der erfindungsgemäßen Vorrichtung in der Zwei-Mengen-Spültechnik wird insbesondere eine Ausgestaltung vorgeschlagen, in der einem der Auslöseelemente ein zweiarmiger, winkelförmiger Hebel (Steuerhebel) zugeordnet ist, der an der mit dem Ablaufventil verbindbaren Halterung schwenkbar gelagert ist, mit einem seiner beiden Arme an dem zugeordneten Auslöseelement berührend anliegt und bei einer Schwenkbewegung des Auslöseelements an diesem gleitet, und dessen zweiter Arm als Anschlag für einen vom Überlaufrohr des Ablaufventils vorstehenden Vorsprung dient.

Weitere bevorzugte und vorteilhafte Ausgestaltungen der erfindungsgemäßen Vorrichtung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Vorderansicht einer Betätigungsplatte;
- Fig. 2: eine perspektivische Rückansicht der Betätigungsplatte der Fig. 1;
- Fig. 3: zwei voneinander getrennte, gehäuseartige Halterungen mit integrierten Kraftwandlern, die jeweils eine Druckkraft in eine Zugkraft umwandeln, und damit gekoppelte Bowdenzüge, in perspektivischer Darstellung;
- Fig. 4: die beiden Halterungen mit den Kraftwandlern der Fig. 3, wobei zur besseren Veranschaulichung eine Gehäusehälfte des vorderen Kraftwandlers weggelassen ist;
- Fig. 5: eine Seitenansicht der vorderen Halterung mit dem integrierten Kraftwandler der Fig. 4;
- Fig. 6: eine perspektivische Darstellung einer Halterung zur Anbringung an einem Ablaufventil, mit mehreren daran schwenkbar gelagerten Hebeln zur Auslösung einer Teil- oder Vollspülung, in einer Ausgangsstellung;
- Fig. 7: eine weitere perspektivische Darstellung der Halterung der Fig. 6;
- Fig. 8: eine perspektivische Darstellung der Halterung gemäß Fig. 7, wobei die mit Bowdenzügen gekoppelten Hebel durch eine Abdeckung gekapselt sind;
- Fig. 9: eine perspektivische Draufsicht einer Halterung ähnlich der Halterung der Fig. 6;
- Fig. 10: eine weitere perspektivische Darstellung der Halterung der Fig. 6, wobei sich ein Hebel in einer eine Vollspülung auslösenden Stellung befindet;
- Fig. 11: eine weitere perspektivische Darstellung der Halterung der Fig. 6 in der Auslösestellung gemäß Fig. 10, wobei zur besseren Veranschaulichung ein oberer Abschnitt der Halterung weggeschnitten ist;
- Fig. 12: eine weitere perspektivische Darstellung der Halterung der Fig. 6, wobei sich die daran schwenkbar gelagerten Hebel in einer eine Teilspülung auslösenden Stellung befinden, und wobei wiederum zur besseren Veranschaulichung ein oberer Abschnitt der Halterung weggeschnitten ist;
- Fig. 13: eine perspektivische Darstellung eines Ablaufventils mit einer an dessen Gehäuse montierten Halterung gemäß Fig. 9, wobei sich die eine Teiloder Vollspülung auslösenden Hebel in einer Ausgangsstellung befinden;
- Fig. 14: eine perspektivische Darstellung des Ablaufventils der Fig. 13, wobei die rechte Hälfte des Gehäuses weggeschnitten ist und sich das Überlaufrohr mit einer daran befestigten Dichtung als Ventilkörper in einer angehobenen Stellung befindet, die einer Teilspülung entspricht; und
- Fig. 15: eine perspektivische Darstellung des Ablaufventils der Fig. 13, wobei die rechte Hälfte des Gehäuses wiederum weggeschnitten ist und sich das Überlaufrohr mit der daran befestigten Dichtung als Ventilkörper in einer angehobenen Stellung befindet, die einer Vollspülung entspricht.

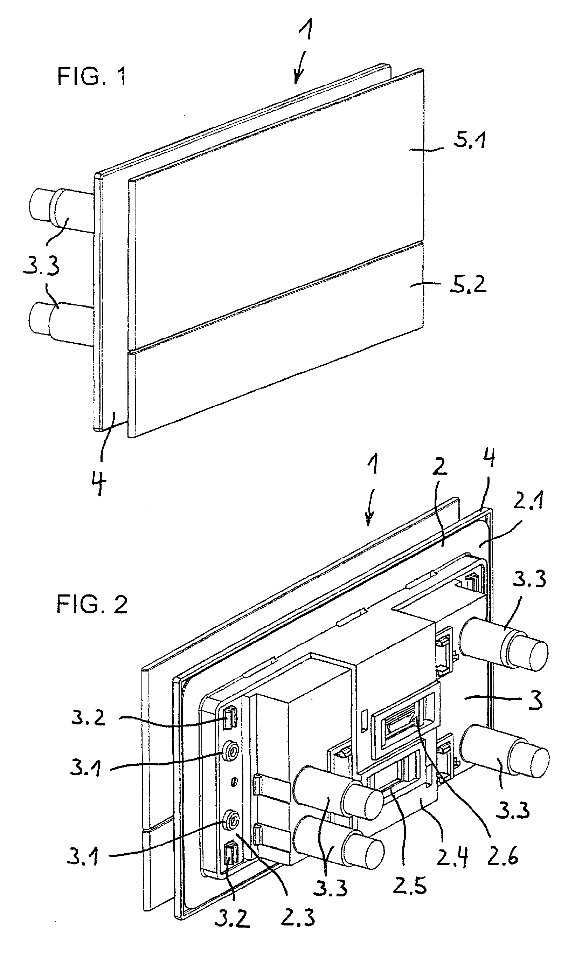

In den Figuren 1 und 2 ist eine neuartige Betätigungsplatte 1 für einen WC-Unterputzspülkasten in Zwei-Mengen-Spültechnik dargestellt.

Die Betätigungsplatte 1 ist modular aufgebaut. Sie weist eine der Revisionsöffnung eines Unterputzspülkastens zugeordnete Abdeckung 2 als Plattform auf. Die Abdeckung 2 ist rahmenförmig ausgebildet und kann daher auch als Grundrahmen bezeichnet werden. Sie hat einen flanschförmigen Abschnitt 2.1, an dem ein rückseitig vorstehender Kragen 2.2 einteilig angeformt ist. An dem Kragen 2.2 sind vertikal verlaufende Querstege 2.3 sowie ein Mittelsteg 2.4 angeformt. Die Querstege 2.3 sind mit Durchbrüchen zur Durchführung von Befestigungsmitteln versehen. Die Abdeckung 2 kann unmittelbar an einer Unterputzeinheit befestigt werden.

Die Querstege 2.3 sind ferner mit Ausnehmungen (Durchbrüchen) zur Aufnahme von Zentrierelementen 3.1 bzw. zur Verrastung von Rastzungen 3.2 einer zweiten Abdeckung 3 versehen. Die zweite Abdeckung 3 weist einen schalenförmig ausgebildeten Abschnitt auf, an den wiederum ein flanschförmiger Abschnitt angeformt ist. Der flanschförmige Abschnitt trägt die in den Ausnehmungen der ersten Abdeckung 2 verrastbaren Rastzungen 3.2 sowie bolzenförmige Zentrierelemente 3.1, die in die zylindrischen Ausnehmungen der Abdeckung 2 eingesteckt werden. Die zweite Abdeckung 3 wird von vorne in den Grundrahmen, d.h. die erste Abdeckung 2 eingesetzt.

An dem schalenförmigen Abschnitt der Abdeckung 3 sind rückseitig vier zylindrische Hülsen 3.3 angeformt, die endseitig verschlossen sind. In die Hülsen 3.3 sind von vorne Gleitbuchsen (nicht gezeigt) eingesetzt, in denen Gleitstangen (nicht gezeigt), die mit zwei tastenförmigen Betätigungselementen (nicht gezeigt) verbunden sind, axial verschiebbar gelagert sind.

Der flanschförmige Abschnitt 2.1 des Grundrahmens 2 ist vorderseitig mit einer rahmenförmigen Sichtblende 4 abgedeckt, deren Öffnung die beiden tastenförmigen Betätigungselemente (nicht gezeigt) durchdringen. Die linear durch Druckkraft beweglichen Betätigungselemente (Betätigungstasten) stehen in der in Fig. 1 gezeigten Normalstellung gegenüber der Vorderseite der Sichtblende 4 vor. Die beiden Betätigungstasten sind an ihrer Vorderseite mit ebenen Drückerplatten 5.1, 5.2 versehen, die gegenüber den Mantelflächen der Betätigungstasten seitlich in der Weise vorspringen, dass in der in Fig. 1 dargestellten Normalstellung der Eindruck entsteht, als ob die Drückerplatten 5.1, 5.2 vor der Wand bzw. Sichtblende 4 schweben würden. Die große Drückerplatte 5.1 ist zur dabei Auslösung einer Vollspülung bestimmt, während die kleine Drückerplatte 5.2 für die Auslösung einer Teilspülung (Kleinspülung) vorgesehen ist.

Wie in Fig. 2 zu erkennen ist, weist der Mittelsteg 2.4 der Abdeckung 2 Öffnungen 2.5, 2.6 auf, in die Halterungen 7.1, 7.2 für flexible Kraftübertragungsglieder eingeclipst (eingerastet) werden.

Als flexible Kraftübertragungsglieder werden zwei hochflexible Bowdenzüge 8.1, 8.2 verwendet. Zwischen der Betätigungstaste und dem jeweiligen Bowdenzug ist ein Kraftwandler 9.1, 9.2 angeordnet, der eine mit der Betätigungstaste ausgeübte Druckkraft in eine Zugkraft umwandelt.

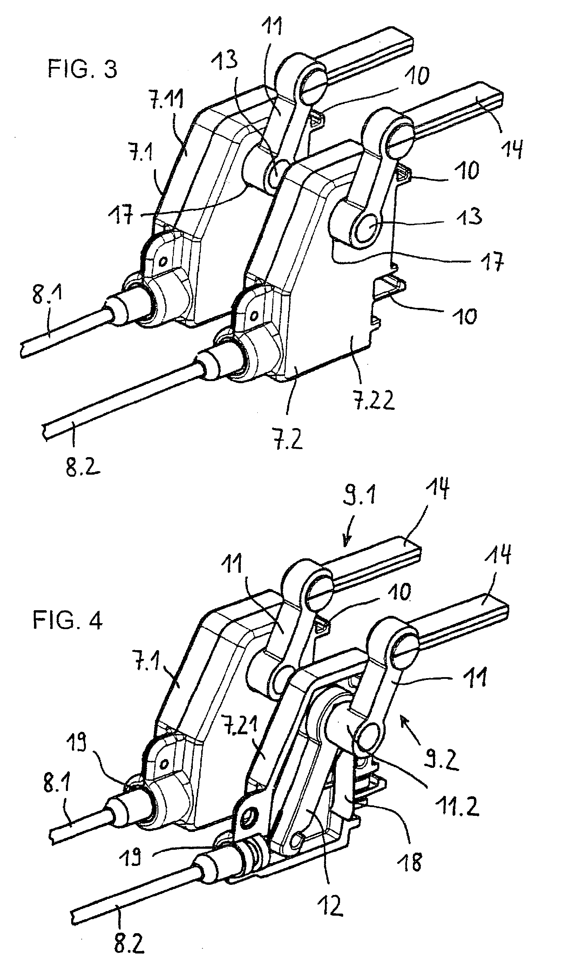

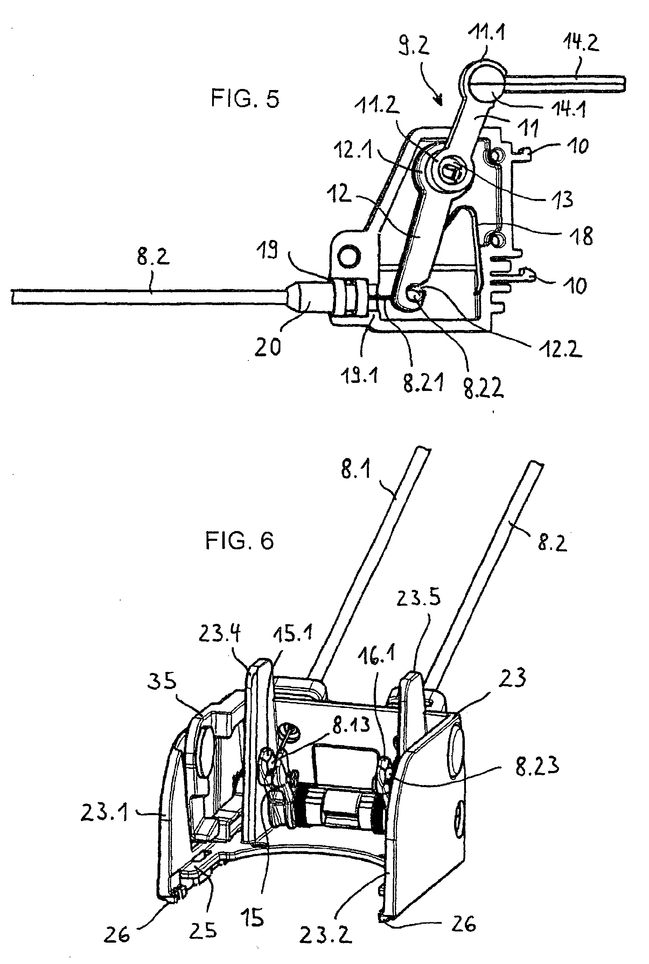

Der Kraftwandler 9.1, 9.2 ist in einer Halterung 7.1 bzw. 7.2 integriert, die zungenförmige Clipelemente 10 (Rastelemente) aufweist und an einer der Öffnungen 2.5, 2.6 der Abdeckung 2 der Betätigungsplatte 1 lösbar angeclipst wird. Wie in den Figuren 4 und 5 zu sehen ist, weist der Kraftwandler 9.2 einen ersten Hebel 11 und einen damit drehstarr verbundenen zweiten Hebel 12 auf, die an einem gemeinsamen Zapfen 13 der Halterung 7.1 bzw. 7.2 schwenkbar gelagert sind. An dem ersten Hebel 11 ist ein der Betätigungstaste zugeordneter Stößel 14 gelenkig angebracht. Der Hebel 11 weist hierzu eine kreisbogenförmige Gelenkschale 11.1 auf, die einen am Stößel 14 angeformten Zylinder 14.1 mit mehr als 180°, beispielsweise mit ca. 230° umgreift. An den zylinderförmigen Kopf 14.1 des Stößels 14 schließt sich ein stangenförmiger Abschnitt 14.2 an. Am anderen Ende des Hebels 11 ist ein buchsenförmiges Gelenkauge 11.2 ausgebildet, das auf den Gelenkzapfen 13 der Halterung aufgeschoben ist. Der Hebel 11 ist über sein Gelenkauge im Bereich eines Gelenkauges 12.1 des zweiten Hebels 12 mit letzterem formschlüssig und drehstarr verbunden.

Der zweite Hebel 12 weist an seinem dem Gelenkauge 12.1 gegenüberliegenden Ende eine Aufnahme 12.2 zur Anbindung des Zugdrahtes 8.21 des Bowdenzuges 8.2 auf. Die Aufnahme 12.2 ist als Gelenkverbindung ausgeführt, so dass der Zugdraht 8.21 gelenkig an dem Hebel 12 anbindbar ist. Das Ende des Hebels 12 ist im Bereich der Aufnahme 12.2 geschlitzt, wobei die Schlitzbreite etwas größer als der Durchmesser des Zugdrahtes 8.21 ist. Der Zugdraht 8.21 weist an seinen Enden - wie an sich bekannt - angegossene oder angequetschte Kopfstücke 8.22, 8.23; 8.13 auf, die formschlüssig in die Aufnahme 12.2 bzw. eine Aufnahme 15.1, 16.1 eines am Ablaufventil angeordneten Hebels 15 bzw. 16 einsetzbar sind.

Die in den Figuren 3 bis 5 dargestellte Halterung 7.1, 7.2 des Kraftwandlers 9.1 bzw. 9.2 ist als Gehäuse ausgeführt und aus zwei lösbar miteinander verbindbaren Gehäusehälften 7.11, 7.12; 7.21, 7.22 gebildet. Die schalenförmige Gehäusehälfte 7.11, 7.21, weist an ihrer Innenseite den Gelenkzapfen 13 auf, während die andere schalenförmige Gehäusehälfte 7.12, 7.22 einen mit dem Gelenkzapfen 13 fluchtenden Durchbruch 17 aufweist, den das buchsenförmige Gelenkauge 11.2 des außen angeordneten Hebels 11 mit radialem Spiel durchdringt. Der zweite Hebel 12 ist folglich in dem Gehäuse 7.1, 7.2 schwenkbar gelagert und eingekapselt. In dem Gehäuse 7.1, 7.2 ist eine den Hebel 12 in eine Ausgangsstellung vorspannende Rückstellfeder 18 angeordnet. Die Feder 18 ist im Wesentlichen U- oder V-förmig gebogen, wobei ein Schenkel der Feder 18 an dem Hebel 12 und der andere Schenkel an einer innenwand des Gehäuses 7.1, 7.2 anliegt.

Die Gehäusehälften 7.11, 7.12; 7.21, 7.22 bilden einen Durchbruch 19 zur Durchleitung des Bowdenzuges 8.1 bzw. 8.2. Der Durchbruch 19 weist einen Absatz 19.1 auf, an dem eine mit der schlauchförmigen Hülle des Bowdenzuges 8.1, 8.2 verbundene Hülse 20 formschlüssig anliegt (vgl. Fig. 5). Die den Bowdenzügen 8.1, 8.2 zugeordneten Kraftwandler 9.1, 9.2 sind an getrennten Halterungen (Gehäusen) 7.1, 7.2 gelagert, so dass diese bei unterschiedlich gestalteten Betätigungsplatten unabhängig voneinander an verschiedenen Stellen der Betätigungsplatte 1 angeclipst werden können.

Jedem der beiden Bowdenzüge 8.1, 8.2 ist ein Auslöseelement 21, 22 zugeordnet, wobei die Auslöseelemente 21, 22 gemeinsam an einer weiteren Halterung 23 gelagert sind, die mit mindestens einem Verbindungselement zur Herstellung einer lösbaren, form- und/oder kraftschlüssigen Verbindung mit einem dem Ablaufventil zugeordneten Gehäuse oder Überlaufrohr versehen ist.

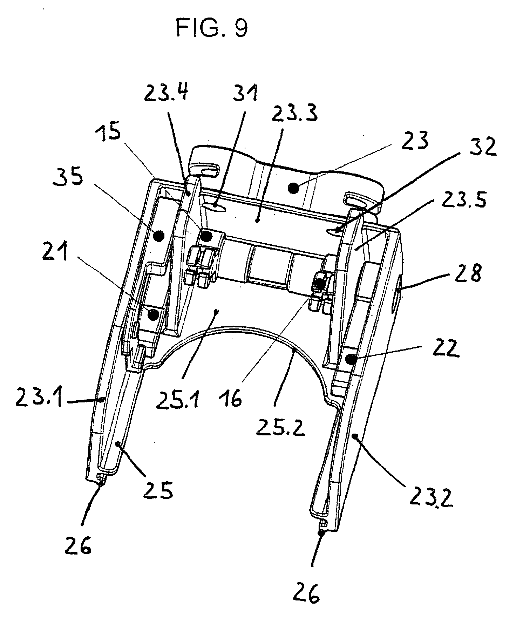

In den in den Figuren 6 bis 15 dargestellten Ausführungsbeispielen sind Halterungen 23 dargestellt, die als Aufsatz auf das Gehäuse 24 eines Ablaufventils aufschiebbar sind.

Die Halterung 23 ist im Wesentlichen U-förmig ausgebildet. Sie weist zwei im Wesentlichen vertikal und parallel zueinander verlaufende Wandabschnitte 23.1, 23.2 auf, die einstückig mit einer Querwand 23.3 verbunden sind. An den Innenseiten der Wandabschnitte 23.1, 23.2 sind parallel zueinander verlaufende Flansch- oder Stegabschnitte 25 als Verbindungselemente angeformt, die mit an dem Gehäuse 24 bzw. Gehäusedeckel 24.1 des Ablaufventils angeformten Winkelelementen 24.2 zusammenwirken und eine lösbare, form- und/oder kraftschlüssige Verbindung bilden. Zusätzlich zu den Flansch- oder Stegabschnitten 25 sind an der Halterung 23 und/oder dem Gehäuse 24 des Ablaufventils vorzugsweise Clipelemente 26 vorgesehen, um die funktionsgerechte Positionierung der Halterung 23 relativ zu dem Überlaufrohr 27 des Ablaufventils zu vereinfachen.

Die Stegabschnitte 25 gehen in einen Bodenabschnitt 25.1 über, der eine an das Überlaufrohr 27 angepasste bogenförmige Einbuchtung 25.2 aufweist. An den Bodenabschnitt 25.1 und die Querwand 23.3 sind zwei vertikal und parallel zueinander verlaufende Stege 23.4, 23.5 angeformt. Die Stege 23.4, 23.5 überragen die Wandabschnitte 23.1, 23.2 sowie die Querwand 23.3, wobei die Querwand 23.3 einen oberen, in Richtung des Bodenabschnitts 25.1 geneigten Abschnitt aufweist.

In den Wandabschnitten 23.1, 23.2 und Stegen 23.4, 23.5 sind miteinander fluchtende Durchbrechungen 28 ausgebildet, in denen eine oder zwei stangenförmige Achsen 29 aufgenommen sind. Auf der Achse bzw. den Achsen 29 sind Hebel 15, 16, 21, 22 voneinander unabhängig schwenkbar gelagert. Die Hebel 15, 16 weisen an ihrem von der Achse 29 abgewandten Ende jeweils einen Schlitz und eine Aufnahme 15.1, 16.1 zur formschlüssigen Anbindung eines Zugdraht-Kopfstücks 8.13, 8.23 eines Bowdenzuges 8.1, 8.2 auf.

Am oberen Abschnitt der Querwand 23.3 ist außen ein Ansatz 30 angeformt, in dem Durchbrüche 31, 32 zur Durchleitung der Zugdrähte 8.11, 8.21 der Bowdenzüge 8.1, 8.2 ausgebildet sind. Der jeweilige Durchbruch 31, 32 hat einen Absatz (nicht gezeigt), an dem eine mit der schlauchförmigen Hülle des Bowdenzuges 8.1, 8.2 verbundene Hülse 33, 34 formschlüssig anliegt.

Die mit den Bowdenzügen 8.1, 8.2 verbundenen, zwischen den vertikalen Stegen 23.4, 23.5 angeordneten Hebel 15, 16 sind jeweils mit einem als Auslöseelement fungierenden Auslösehebel 21, 22 drehstarr verbunden. Die Auslösehebel 21, 22 sind dabei zwischen dem vertikalen Wandabschnitt 23.1 bzw. 23.2 und dem benachbarten vertikalen Steg 23.4 bzw. 23.5 angeordnet.

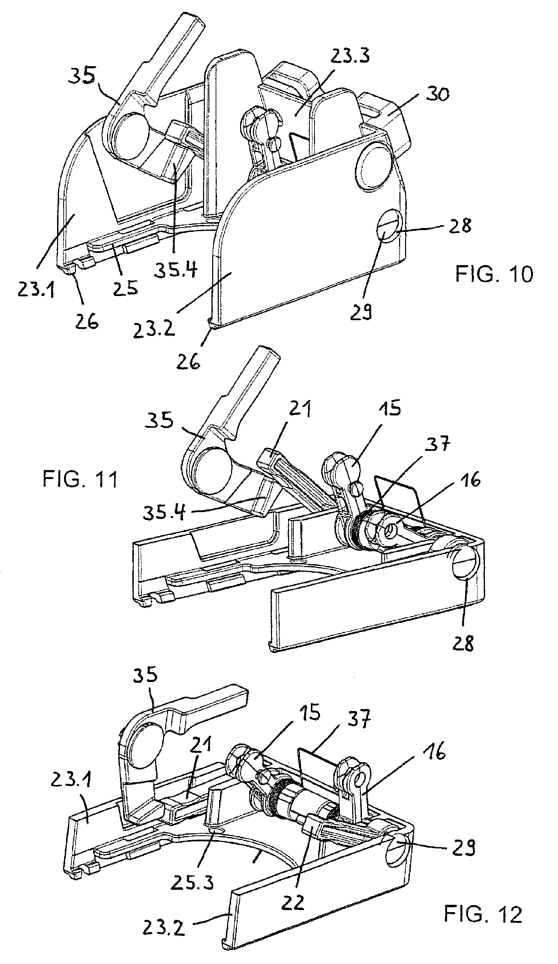

Dem linken Hebel (Auslösehebel) 21 ist ein zweiarmiger, winkelförmiger Hebel (Steuerhebel) 35 zugeordnet, der ebenfalls an der Halterung 23 schwenkbar gelagert ist. Wie insbesondere in den Figuren 10 bis 12 und 15 zu erkennen ist, liegt der Hebel 35 mit einem Arm 35.1 an dem Auslösehebel 21 berührend an und gleitet an diesem 21, wenn dieser geschwenkt wird. Der zweite Arm 35.2 des Hebels 35 dient dagegen als Anschlag für einen am Überlaufrohr 27 des Ablaufventils angeformten Vorsprung 36.1.

Die Halterung 23 ist mit einer Rückstellfeder 37 versehen, die den jeweiligen Hebel 15 bzw. 16 und den damit drehstarr verbundenen Auslösehebel 21 oder 22 in eine Ausgangsstellung zurückbewegt. Der mit dem Hebel 15 oder 16 verbundene Draht 8.11 bzw. 8.21 des Bowdenzuges wird auch dabei nur auf Zug belastet. Die Halterung 23 ist vorzugsweise mit einer abnehmbaren Abdeckung 38 versehen, welche die Hebel 15, 16, die damit verbundenen Enden der Bowdenzüge 8.1, 8.2 sowie die Rückstellfeder 37 einkapselt. Die Abdeckung 38 liegt dabei an den Stegen 23.4, 23.5 und dem Bodenabschnitt 25.1 an, wobei in dem Bodenabschnitt 25.1 Durchbrechungen 25.3 ausgebildet sind, in die an der Abdeckung 38 angeformte Stifte 38.1 mit durchmessererweiterten Köpfen kraftschlüssig einsteckbar sind.

Die Halterungen 7.1, 7.2, 23 und Hebel 11, 12, 15, 16, 21, 22, 35 sind vorzugsweise als Spritzgießteile aus Kunststoff hergestellt. Die Halterungen 7.1, 7.2, 23 mit den Kraftwandlern 9.1, 9.2 bzw. Auslösehebeln 21, 22 bilden mit den Bowdenzügen 8.1, 8.2 zusammen eine Einheit.

Nachfolgend wird die Funktionsweise der erfindungsgemäßen Vorrichtung näher beschrieben.

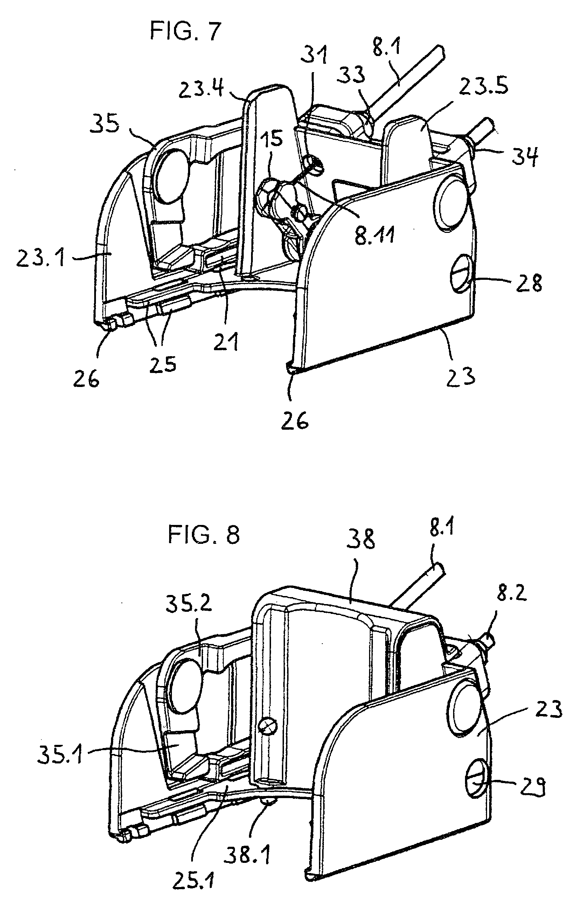

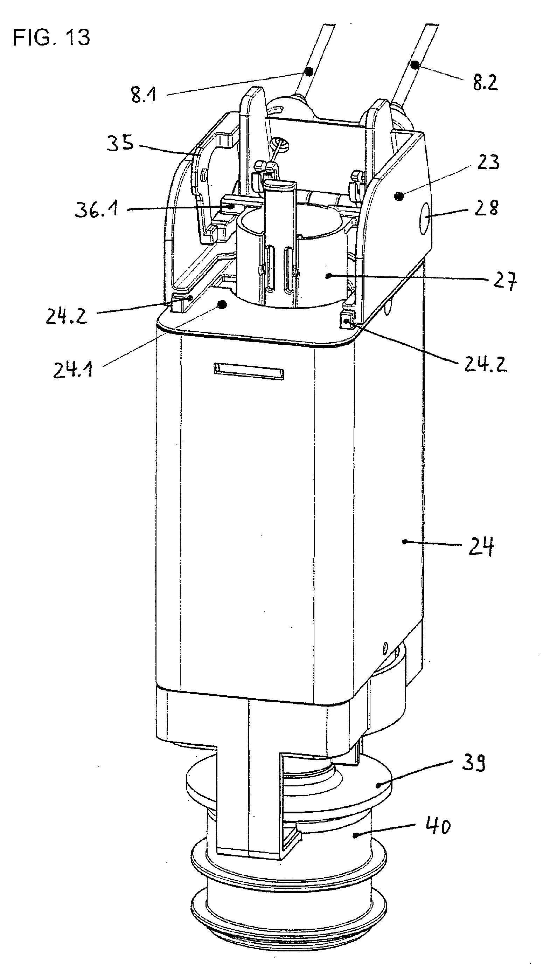

In den Figuren 13 bis 15 ist die Halterung 23 als Aufsatz auf einen Deckel 24.1 eines Ablaufventil-Gehäuses 24 aufgeschoben und mit dem Deckel 24.1 lösbar verrastet. Die Abdeckung 38 gemäß Fig. 8 ist der Übersichtlichkeit halber fortgelassen. Die Hebel 15, 16 mit den Bowdenzugaufnahmen sind drehbar in der Halterung 23 gelagert und formschlüssig mit den Hebeln 21, 22 zur Auslösung einer Voll- oder Teilspülung verbunden. Zur Freigabe einer Vollspülung dient der zweiarmige, winkelförmige Steuerhebel 35, welcher mit dem Auslösehebel 21 kommuniziert.

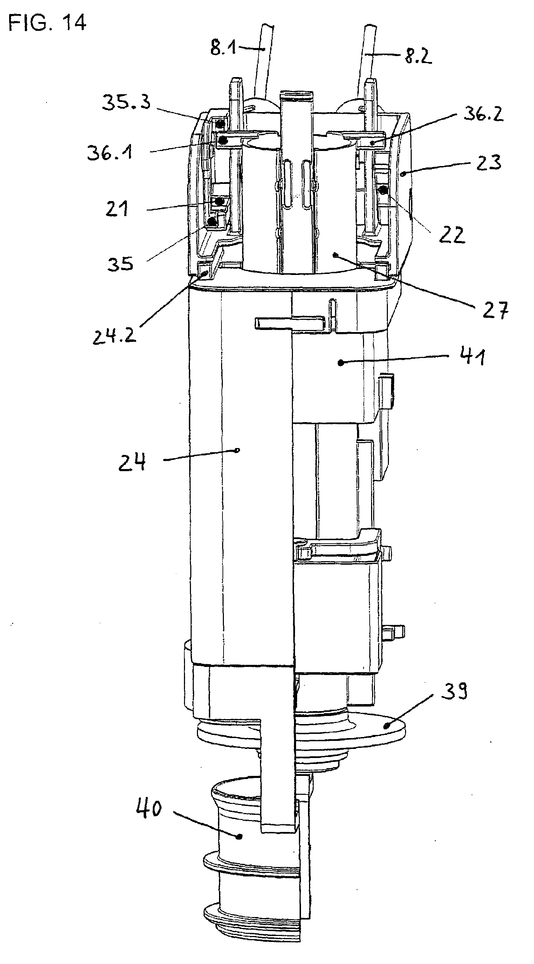

In Fig. 13 ist das Ablaufventil geschlossen. Die ringförmige Ventildichtung 39 liegt in Fig. 13 dichtend auf dem Ventilsitz 40. In Fig. 14 ist das Ablaufventil dagegen während einer Teilspülung zu sehen. Die Hebel 15 und 21 sind in diesem Fall unbetätigt. Die beim Drücken der kleinen Drückerplatte 5.2 gemäß Fig. 1 ausgeübte Druckkraft wird durch den Kraftwandler 9.2 gemäß Fig. 5 in eine Zugkraft umgewandelt. Durch Ziehen am Zugdraht des Bowdenzuges 8.2 wird über den Hebel 16 der Hebel 22 geschwenkt, welcher dabei von unten gegen den Vorsprung (Angriffspunkt) 36.2 am Überlaufrohr 27 drückt und das Überlaufrohr etwas anhebt. Ein mit dem Überlaufrohr 27 verbundener Schwimmer 41 treibt das Überlaufrohr nach oben. Dadurch, dass der Hebel 35 nicht freigegeben sondern durch den Hebel 21 blockiert ist, stößt der Vorsprung 36.1 des Überlaufrohres 27 unter den am Hebel 35 angeformten Anschlag 35.3. Das Überlaufrohr 27 ist so gehindert, in die einer Vollspülung zugeordnete Offenstellung aufzuschwimmen. Wenn der Wasserstand im Spülkasten unter ein bestimmtes Niveau abgefallen ist und der Schwimmer 41 keinen ausreichenden Auftrieb mehr besitzt, schließt das Ablaufventil nach der Teilspülung.

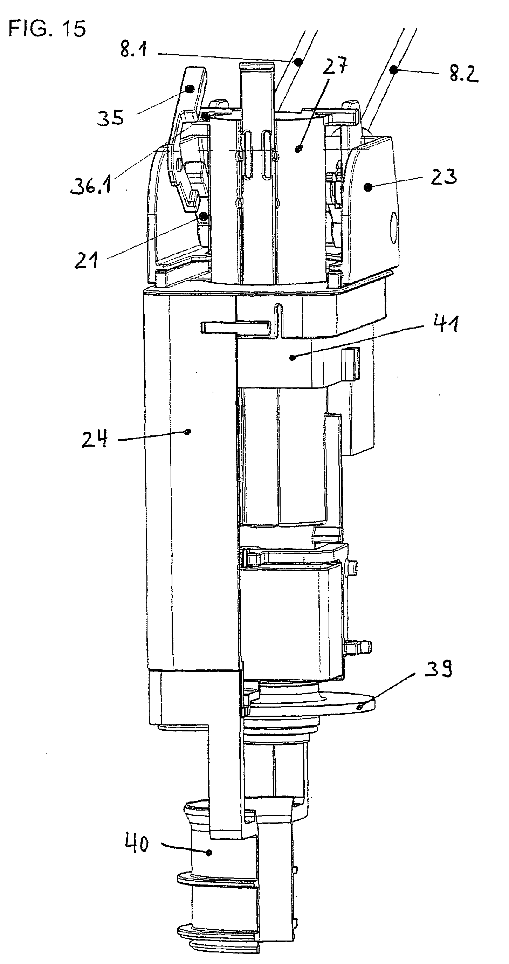

In Fig. 15 ist das Ablaufventil während der Vollspülung gezeigt. Die beim Drücken der großen Drückerplatte 5.1 gemäß Fig. 1 ausgeübte Druckkraft wird durch einen Kraftwandler gemäß Fig. 5 in eine Zugkraft am Bowdenzug 8.1 umgewandelt. Über Ziehen am Zugdraht des Bowdenzuges 8.1 werden der Hebel 15 und der Auslösehebel 21 zusammen nach oben geschwenkt, wobei der Hebel 21 gegen den Vorsprung 36.1 drückt und so das Überlaufrohr 27 anhebt. Der Hebel 21 gibt außerdem den Hebel 35 frei, der dabei mit seinem Vorsprung 35.4 an der Unterseite des Hebels 21 entlang gleitet. Der mit dem Überlaufrohr verbundene Schwimmer 41 kann das Überlaufrohr 27 nun bis in eine der Vollspülung zugeordnete Offenstellung anheben. Der am Überlaufrohr 27 angeformte Vorsprung 36.1 stößt dabei nicht an den Hebe1 35.

Die Ausführung der erfindungsgemäßen Vorrichtung ist nicht auf die vorstehend beschriebenen Ausführungsbeispiele beschränkt. Vielmehr sind zahlreiche Varianten denkbar, die auch bei abweichender Gestaltung von dem in den Ansprüchen enthaltenen Erfindungsgedanken Gebrauch machen. So kann die erfindungsgemäße Vorrichtung beispielsweise auch an einer Betätigungsplatte montiert werden, die anstelle einer linear bewegbaren Betätigungstaste eine schwenkbare Betätigungstaste oder Betätigungswippe aufweist.

## Patentansprüche

1. Vorrichtung zum Auslösen eines Spülvorgangs bei einem sanitären Spülkasten, mit einem Ablaufventil, einer Betätigungsplatte (1) und mindestens zwei flexiblen Kraftübertragungsgliedern, wobei das jeweilige Kraftübertragungsglied die Bewegung einer Betätigungstaste auf mindestens ein Auslöseelement für das Ablaufventil überträgt, und wobei das jeweilige Kraftübertragungsglied aus einem Bowdenzug (8.1, 8.2) gebildet ist,
**dadurch gekennzeichnet, dass** zwischen dem jeweiligen Bowdenzug (8.1, 8.2) und der Betätigungstaste ein Kraftwandler (9.1, 9.2) angeordnet ist, der eine mit der Betätigungstaste ausgeübte Druckkraft in eine Zugkraft umwandelt und eine Halterung (7.1, 7,2) aufweist, die mit mindestens einem Clipelement (10) versehen und mit der Betätigungsplatte (1) lösbar verbindbar ist, wobei jedem der Bowdenzüge (8.1, 8.2) ein Auslöseelement (21, 22) zugeordnet ist und die Auslöseelemente (21, 22) gemeinsam an einer weiteren Halterung (23) gelagert sind, die mit mindestens einem Verbindungselement (25, 26) zur Herstellung einer lösbaren, form- und/oder kraftschlüssigen Verbindung mit einem dem Ablaufventil zugeordneten Gehäuse (24) versehen ist, und wobei die weitere Halterung (23) zwei parallel zueinander verlaufende Flansch- oder Stegabschnitte (25) als Verbindungselemente aufweist, die mit an dem Gehäuse (24) des Ablaufventils angeformten Winkelelementen (24.2) zusammenwirken und eine lösbare, form- und/oder kraftschlüssige Verbindung bilden.

2. Vorrichtung nach Anspruch 1,
**dadurch gekennzeichnet, dass** die den Bowdenzügen (8.1, 8.2) zugeordneten Kraftwandler (9.1, 9.2) an getrennten Halterungen (7.1, 7.2) gelagert sind.

3. Vorrichtung nach Anspruch 1 oder 2,
**dadurch gekennzeichnet, dass** der Kraftwandler (9.1, 9.2) einen ersten Hebel (11) und einen damit verbundenen zweiten Hebel (12) aufweist, wobei an dem ersten Hebel (11) ein der Betätigungstaste zugeordneter Stößel (14) gelenkig angebracht ist und an dem zweiten Hebel (12) eine Aufnahme (12.2) zur Anbindung des Zugdrahtes (8.11, 8.21) des Bowdenzuges (8.1, 8.2) vorgesehen ist.

4. Vorrichtung nach Anspruch 3,
**dadurch gekennzeichnet, dass** die Aufnahme (12.2) als Gelenkverbindung ausgeführt ist, so dass der Zugdraht (8.11, 8.21) des Bowdenzuges gelenkig an dem zweiten Hebel (12) angebunden ist.

5. Vorrichtung nach Anspruch 3 oder 4,
**dadurch gekennzeichnet, dass** die dem Kraftwandler (9.1, 9.2) zugeordnete Halterung (7.1, 7.2) mit einer gegen den zweiten Hebel (12) vorgespannten Rückstellfeder (18) versehen ist.

6. Vorrichtung nach einem der Ansprüche 3 bis 5,
**dadurch gekennzeichnet, dass** die dem Kraftwandler (9.1, 9.2) zugeordnete Halterung (7.1, 7.2) in Form eines Gehäuses ausgebildet ist, in welchem der zweite Hebel (12) schwenkbar gelagert und eingekapselt ist.

7. Vorrichtung nach einem der Ansprüche 1 bis 6,
**dadurch gekennzeichnet, dass** der jeweilige Bowdenzug (8.1, 8.2) mit einem an der weiteren Halterung (23) schwenkbar gelagerten Hebel (15, 16) verbunden ist, der drehstarr mit einem als Auslöseelement fungierenden Auslösehebel (21, 22) verbunden ist.

8. Vorrichtung nach Anspruch 7,
**dadurch gekennzeichnet, dass** einem (21) der Auslöseelemente ein zweiarmiger, winkelförmiger Hebel (35) zugeordnet ist, der an der weiteren Halterung (23) schwenkbar gelagert ist, mit einem (35.1) seiner beiden Arme an dem zugeordneten Auslöseelement (21) berührend anliegt und bei einer Schwenkbewegung des Auslöseelements (21) an diesem gleitet, und dessen zweiter Arm (35.2) als Anschlag für einen vom Überlaufrohr (27) des Ablaufventils vorstehenden Vorsprung (36.1) dient.

9. Vorrichtung nach Anspruch 7 oder 8,
**dadurch gekennzeichnet, dass** die weitere Halterung (23) mit mindestens einer Rückstellfeder (37) versehen ist, die den mit dem jeweiligen Bowdenzug (8.1, 8.2) verbundenen, an der weiteren Halterung (23) schwenkbar gelagerten Hebel (15, 16) in eine Ausgangsstellung zurückbewegt.

10. Vorrichtung nach einem der Ansprüche 7 bis 9,
**dadurch gekennzeichnet, dass** die weitere Halterung (23) mit einer abnehmbaren Abdeckung (38) versehen ist, welche den mit dem jeweiligen Bowdenzug verbundenen Hebel (15, 16) einkapselt.

## Claims

1. Device for triggering a flushing process in a sanitary cistern, comprising a drain valve, an actuating plate (1) and at least two flexible force transfer elements, each force transfer element transferring the movement of an actuating button to at least one drain valve trigger element, and each force transfer element being formed from a Bowden cable (8.1, 8.2), **characterised in that** a force converter (9.1, 9.2) is arranged between each Bowden cable and the actuating button, and converts a pressure exerted by the actuating button into a traction force and comprises a holder (7.1, 7.2) which is provided with at least one clip element (10) and which can be releasably attached to the actuating plate (1), a trigger element (21, 22) being associated with each of the Bowden cables (8.1, 8.2), and the trigger elements (21, 22) being mounted together on a further holder (23), which is provided with at least one connection element (25, 26) for producing a releasable positive and/or frictional fitting connection with a housing (24) associated with the drain valve, and the further holder (23) having two flange or web regions (25), which extend mutually parallel, as connection elements, which co-operate with angle elements (24.2) integrally formed on the housing (24) of the drain valve and form a releasable positive and/or frictional fitting connection.

2. Device according to claim 1,
**characterised in that** the force converters (9.1, 9.2) associated with the Bowden cables (8.1, 8.2) are mounted on separate holders (7.1, 7.2).

3. Device according to either claim 1 or claim 2,
**characterised in that** the force converter (9.1, 9.2) comprises a first lever (11) and a second lever (12) connected to said first lever, a push rod (14) associated with the actuating button being articulated to the first lever (11) and a holding fixture (12.2) being provided on the second lever (12) for connecting the transmission wire (8.11, 8.21) of the Bowden cable.

4. Device according to claim 3,
**characterised in that** the holding fixture (12.2) is configured as a hinge joint so that the transmission wire (8.11, 8.21) of the Bowden cable is connected to the second lever (12) in a hinged manner.

5. Device according to either claim 3 or claim 4,
**characterised in that** the holder (7.1, 7.2) associated with the force converter (9.1, 9.2) is provided with a return spring (18) which is biased against the second lever (12).

6. Device according to any one of claims 3 to 5,
**characterised in that** the holder (7.1, 7.2) associated with the force converter (9.1, 9.2) is formed as a housing, in which the second lever (12) is pivotably mounted and encapsulated.

7. Device according to any one of claims 1 to 6,
**characterised in that** the respective Bowden cable (8.1, 8.2) is connected to a lever (15, 16) which is pivotably mounted on the further holder (23) and connected in a torsionally stiff manner with a trigger lever (21, 22) which acts as a trigger element.

8. Device according to claim 7,
**characterised in that** a double-armed, angular lever (35) is associated with one (21) of the trigger elements and pivotably mounted on the further holder (23), one (35.1) of the two arms of said lever being positioned in contact with the associated trigger element (21) and sliding thereon during a pivoting movement of the trigger element (21), and the second arm (35.2) thereof acting as a stop for a projection (36.1) protruding from the overflow pipe (27) of the drain valve.

9. Device according to either claim 7 or claim 8,
**characterised in that** the further holder (23) is provided with at least one return spring (37), which moves the lever (15, 16) back into a starting position, said lever being connected to the respective Bowden cable (8.1, 8.2) and being pivotably mounted on the further holder (23).

10. Device according to any one of claims 7 to 9,
**characterised in that** the further holder (23) is provided with a releasable cover (38), which encapsulates the lever (15, 16) which is connected to the respective Bowden cable.

## Revendications

1. Dispositif de déclenchement d'un processus de rinçage pour un réservoir de chasse d'eau sanitaire, qui est doté d'une soupape de sortie, d'une plaque d'actionnement (1) et d'au moins deux organes de transmission de force flexibles, sachant que chaque organe de transmission de force transmet le mouvement d'une touche d'actionnement à au moins un élément de déclenchement pour la soupape de sortie, et que chaque organe de transmission de force est formé par un câble Bowden (8.1, 8.2), **caractérisé en ce que**, entre chaque câble Bowden (8.1, 8.2) et la touche d'actionnement, est prévu un transducteur (9.1, 9.2), qui transforme la force de pression exercée au moyen de la touche d'actionnement en une force de traction et est doté d'une support (7.1, 7.2), qui est pourvu d'au moins un élément de clipsage (10) et peut être relié de manière amovible à la plaque d'actionnement (1), sachant qu'à chaque câble Bowden (8.1, 8.2) est associé un élément de déclenchement (21, 22), et que les éléments de déclenchement (21, 22) sont montés en commun sur un autre support (23), qui est pourvu d'au moins un élément de liaison (25, 26) pour la réalisation d'une liaison amovible par emboîtement et / ou par adhérence avec un boîtier (24), qui est associé à la soupape de sortie, et sachant que l'autre support (23) est doté, en tant qu'éléments de liaison, de deux sections en forme de brides ou de pattes (25), qui, s'étendant parallèlement l'une par rapport à l'autre, coopèrent avec des éléments angulaires (24.2), formés sur le boîtier (24) de la soupape de sortie, et forment une liaison amovible par emboîtement et / ou par adhérence.

2. Dispositif selon la revendication 1, **caractérisé en ce que** les transducteurs (9.1, 9.2), associés aux câble Bowden (8.1, 8.2), sont montés sur des supports (7.1, 7.2) séparés.

3. Dispositif selon revendication 1 ou 2, **caractérisé en ce que** le transducteur (9.1, 9.2) est doté d'un premier levier (11) et d'un deuxième levier (12), relié au premier, sachant que sur le premier levier (11) est articulé un poussoir (14), qui est associé à la touche d'actionnement, et que sur le deuxième levier (12) est prévu un réceptacle (12.1) pour le rattachement du fil de traction (8.11, 8.21) du câble Bowden (8.1, 8.2).

4. Dispositif selon la revendication 3, **caractérisé en ce que** le réceptacle (12.2) est réalisé sous la forme d'une liaison articulée, de sorte que le fil de traction (8.11, 8.21) du câble Bowden (8.1, 8.2) soit relié de manière articulée au deuxième levier (12).

5. Dispositif selon revendication 3 ou 4, **caractérisé en ce que** le support (7.1, 7.2) associé au transducteur (9.1, 9.2) est pourvu d'un ressort de rappel (18) précontraint par rapport au deuxième levier (12).

6. Dispositif selon l'une des revendications 3 à 5, **caractérisé en ce que** le support (7.1, 7.2) associé au transducteur (9.1, 9.2) est réalisé sous la forme d'un boîtier dans lequel le deuxième levier (12) est monté pivotant et capsulé.

7. Dispositif selon l'une des revendications 1 à 6, **caractérisé en ce que** chaque câble Bowden (8.1, 8.2) est relié à un levier (15, 16), qui, monté pivotant sur l'autre support (23), est relié de manière rigide en rotation à un levier de déclenchement (21, 22), qui agit en tant qu'élément de déclenchement.

8. Dispositif selon la revendication 7, **caractérisé en ce qu'**à l'un (21) des éléments de déclenchement, est associé un levier à deux bras, en forme de cornière (35), qui est monté pivotant sur l'autre support (23), porte avec l'un (35.1) de ses deux bras contre l'élément de déclenchement associé (21) et, lors d'un mouvement de pivotement de l'élément de déclenchement (21) glisse sur celui-ci, et dont le deuxième bras (35.2) sert de butée pour un épaulement (36.1) en saillie du tube de trop-plein (27) de la soupape de sortie.

9. Dispositif selon revendication 7 ou 8, **caractérisé en ce que** l'autre support (23) est pourvu d'au moins un ressort de rappel (37), qui ramène en position de départ le levier (15, 16) monté pivotant sur l'autre support (23) et relié au câble Bowden (8.1, 8.2) correspondant.

10. Dispositif selon l'une des revendications 7 à 9, **caractérisé en ce que** l'autre support (34) est pourvu d'un couvercle amovible, qui capsule le levier (15, 16) relié au câble Bowden correspondant.
